(19) Europäisches Patentamt
European Patent Office
Office européen des brevets

(11) Numéro de publication: **0 183 575 B1**

(12) **FASCICULE DE BREVET EUROPEEN**

(45) Date de publication de fascicule du brevet: **17.04.91**

(21) Numéro de dépôt: **85401889.2**

(22) Date de dépôt: **26.09.85**

(51) Int. Cl.5: **C08L 23/08**, C08L 33/14, C08K 5/05, C08K 5/09, C08K 5/56, C08K 5/57, //(C08L23/08,33:14,C08K5:05), (C08L23/08,33:14,C08K5:09), (C08L23/08,33:14,C08K5:56), (C08L23/08,33:14,C08K5:57)

(54) **Procédé de réticulation de copolymères éthylène-ester d'hydroxyalkyle.**

(30) Priorité: **10.10.84 FR 8415629**

(43) Date de publication de la demande: **04.06.86 Bulletin 86/23**

(45) Mention de la délivrance du brevet: **17.04.91 Bulletin 91/16**

(84) Etats contractants désignés: **BE CH DE FR GB IT LI LU NL SE**

(56) Documents cités:
**EP-A- 0 021 959**
**EP-A- 0 024 164**
**FR-A- 2 059 168**
**FR-A- 2 093 447**
**US-A- 3 300 452**

(73) Titulaire: **ATOCHEM**
**4 & 8, Cours Michelet La Défense 10**
**F-92800 Puteaux(FR)**

(72) Inventeur: **Nury, Jacques**
**8, Rue de Boyrie**
**F-64000 Pau(FR)**
Inventeur: **Nawrot, Serge**
**Rue Marceau Boulay**
**F-27470 Serquigny(FR)**

(74) Mandataire: **Foiret, Claude et al**
**ATOCHEM Département Propriété Industrielle**
**F-92091 Paris la Défense 10 Cédex 42(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 183 575 B1

## Description

La présente invention concerne un procédé de réticulation de copolymères d'éthylène et d'ester polymérisable hydroxylé par réaction avec un composé organométallique de plomb ou d'étain.

Ces copolymères d'éthylène et d'ester hydroxylé décrits par exemple dans le brevet des Etats Unis d'Amérique 3 300 452 sont d'emploi limité du fait de la difficulté à les faire réticuler. Bien que, lorsque ces polymères sont chauffés à des températures comprises entre 170 °C et 340 °C, leur thermoplasticité soit réduite leur résistance à la traction et leur poids moléculaire apparent soient augmentés, cet unique traitement à chaud, de toute façon très long, ne conduit pratiquement Jamais à une réticulation complète ni même satisfaisante.

La présente invention permet, en mélangeant au copolymère un composé organométallique de plomb ou d'étain ,de réaliser sa réticulation de façon très satisfaisante dans un minimum de temps, et cela, même à des températures peu élevées.

Les copolymères éthylène-ester d'hydroxyalkyle, objets du traitement selon l'invention, résultent de la copolymérisation de 60 pour cent à 99,5 pour cent en poids d'éthylène ou de mélange d'éthylène avec un autre monomère polymérisable éthyléniquement insaturé et de 0,5 pour cent à 40 pour cent en poids d'un ester d'hydroxyalkyle d'un acide alpha, béta-éthyléniquement insaturé de formule :

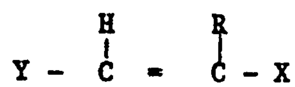

dans laquelle

- R est l'hydrogène ou un groupe méthyle
- X est un groupement - COO $-(CHR')_m-(CH_2)_n-$OH
- m étant un nombre entier de 0 à 5
- n étant un nombre entier de 1 à 6 sachant que m + n est un nombre de 2 à 6
- R' étant un radical hydrocarboné, éventuellement halogéné,
- Y est l'hydrogène,X ou - COO - $CH_2$ - R', X et R' étant définis comme ci-dessus

De façon habituelle R' comprend l'hydrogène et les radicaux organiques contenant jusqu'à 8 atomes de carbone, sans toutefois exclure ceux en contenant un plus grand nombre si désiré. Parmi ces radicaux on peut citer le méthyle, éthyle, propyle, butyle, 2 éthylhexyle, cyclohexyle, phényle, tolyle, éthylphényle ainsi que ces mêmes radicaux possédant un moins un halogène substitué, plus particulièrement le chlore.

Par ester d'hydroxyalkyle on entend l'ester possédant le groupement hydroxyalkyle

$$-(CHR')_m-(CH_2)_n-OH$$

R', m et n étant définis comme précédemment.

Les esters d'hydroxyalkyles des acides éthyléniquement insaturés comprennent les esters hydroxyalkylés des acides monocarboxyliques et dicarboxyliques tels l'acide acrylique, les acides acryliques alpha substitués plus particulièrement l'acide méthacrylique, l'acide maléique et l'acide fumarique.

Comme monomère polymérisable éthyléniquement insaturé qui peut être associé à l'éthylène, jusque dans un rapport en poids de 1/1 on peut choisir par exemple parmi : les alpha oléfines ; les composés aromatiques comme les styréniques ; les acrylates d'alkyles comme l'acrylate d'éthyle, l'acrylate de n-butyle et l'acrylate de 2-éthylhexyle ; les méthacrylates d'alkyles ; les nitriles acryliques et méthacryliques ; les esters maléiques comme le maléate de diéthyle ; les esters fumariques ; les esters d'alcools insaturés comme l'acétate de vinyle.

Selon l'objet de l'invention ces copolymères, préparés par exemple selon la technique décrite dans les brevet des Etats Unis d'Amérique 3 300 452 déjà cité, sont réticulés par réaction avec un composé organométallique de plomb ou d'étain. Ces composés organométalliques sont favorablement choisis parmi les sels d'acides organiques et plus particulièrement parmi les sels des acides organiques contenant jusqu'à 25 atomes de carbone dans leur molécule et mieux jusqu'à 20 atomes, les composés organométalliques de bas poids moléculaire ou facilement migrants, tels par exemple les composés liquides, étant les mieux adaptés, l'une de leurs caractéristiques étant une répartition plus facile et plus homogène dans le copolymère.

Parmi les composés organométalliques de plomb et d'étain convenant plus particulièrement on peut citer les sels des acides de $C_2$ à $C_{13}$ comme le diacétate et le dilaurate de dibutylétain, l'octoate de plomb,

les stéarates de plomb et d'étain ; les mercaptides comme les thioglycolates d'alkylétain et les mercaptoacétates d'alkylétain ; les sulfures comme les sulfures d'étain alkylés ; les carboxylates.

Des quantités de 0,05 à 5 pour cent en poids de composé organométallique par rapport au copolymère éthylène-ester d'hydroxyalkyle conviennent parfaitement à la complète réticulation du copolymère à des températures généralement comprises entre la température ambiante, environ 20° C, et 300° C. Ce procédé de réticulation est particulièrement adapté aux copolymères à base d'éthylène, y compris en mélange avec au moins un autre monomère polymérisable éthyléniquement insaturé tel que par exemple l'acétate de vinyle ou l'acrylate d'éthyle, et d'acrylate ou méthacrylate d'hydroxyalkyle. Comme dans le cas général ces copolymères peuvent contenir de 0,5 à 40 pour cent en poids de produit de polymérisation de l'acrylate ou du méthacrylate hydroxylé.

La réaction de réticulation s'effectue en cours de transformation du copolymère, mais elle peut également s'effectuer après transformation du copolymère. Ceci signifie que le moment de mise en contact du composé organométallique avec le copolymère importe peu. Si une méthode préférée consiste à mélanger ensemble le copolymère et le composé organométallique à une température comprise de préférence entre la température ambiante et 300° C, et mieux à la température voisine de celle de ramollissement du copolymère, tout autre moyen de mise en contact n'est pas exclu. En particulier, il peut être intéressant de transformer préalablement le copolymère, puis, afin de procéder à la réticulation, de mettre en contact superficiellement le matériau obtenu avec le composé organométallique par tout moyen convenable, y compris par exemple de laisser séjourner le matériau, pendant un temps suffisant, dans une solution ou une émulsion contenant le composé organométallique.

Il va de soi que le copolymère éthylène-ester d'hydroxyalkyle réticulé peut être préparé in situ par greffage à chaud, dans un malaxeur, de l'ester sur un polymère ou un copolymère d'éthylène, en présence d'un catalyseur comme un peroxyde organique, puis à introduire, après un certain temps, en cours de malaxage le composé organométallique.

Les exemples suivant illustrent l'invention.

L'évolution de la réticulation est constatée soit par les variations de couple de malaxage, soit par mesure du taux de gel pendant 24 heures à reflux dans le xylène. Dans ce dernier cas l'insoluble est séché sous vide de quelques centaines de Pascals vers 110° C jusqu'à poids constant, le taux de gel étant exprimé en pour cent en poids d'insoluble.

Des résultats sont également exprimés à partir d'essais de fluage.

EXEMPLE 1

Un film de 50 µm d'épaisseur de copolymère éthylène-acrylate d'hydroxyéthyle à 7 % en poids, d'indice de fluidité (Melt Index : MI) de 4 est préparé par extrusion soufflage à 150° C. Le film est exempt d'infondu. Le film est laissé pendant 8 heures à 100° C dans une émulsion de 0,5 % en poids de dilaurate de dibutylétain dans l'eau contenant également 0,1% d'alkyle-arylepolyéthylène glycol <Antarox> comme surfactant.

Le taux de gel est ensuite mesuré et comparé au taux de gel d'un film identique non traité et d'un autre film identique traité dans les mêmes conditions, mais dans une émulsion ne contenant pas de dilaurate de dibutylétain (DBTL).

| | Taux de gel |
|---|---|
| Film non traité | 0 |
| Film traité sans DBTL | 0 |
| Film traité DBTL | 43,3 |

EXEMPLE 2

Par malaxage à 140° C pendant 10 min. dans un malaxeur BRABENDER, type W50-EC d'un copolymère éthylène-acrylate d'hydroxyéthyle à 2 % en poids et respectivement de 1,0 % et 2,0,% en poids de DBTL on prépare les mélanges A et B.

Par compression sous 250 bars à 130° C on prépare des plaques de 1mm d'épaisseur que l'on

conserve en étuve à 100 °C pendant 8 heures. A titre comparatif on effectue le même essai avec le copolymère exempt de DBTL.

La mesure du taux de gel donne les résultats suivants :

| | Taux de gel |
|---|---|
| Essai comparatif | 0 |
| Essai A | 24,1 |
| Essai B | 36,6 |

EXEMPLE 3

On malaxe sous azote dans le BRABENDER de l'exemple 2 à 50 t/min 99,5 % en poids de copolymère éthylène-acrylate d'hydroxyéthyle à 7 % en poids, de MI : 3,5 et 0,5 % en poids de DBTL. On effectue les essais comparatifs en l'absence de DBTL.

Le malaxage à 240 °C a été effectué en présence de 0,6 % de DBTL.

Les variations de couple Nxm de malaxage à différentes températures sont données dans le tableau suivant.

| Variation de couple de malaxage ↓ (Nxm) à t°C | Temps min de malaxage → | 1 | 5 | 6 | 10 | 12 | 14 | 15 | 16 | 18 | 20 | 25 | 30 | 35 | 40 |
|---|---|---|---|---|---|---|---|---|---|---|---|---|---|---|---|
| 160°C | Introduction DBTL à 6 min | 8,1 | - | 6,3 | 6,7 | - | - | 7,4 | - | - | 8,3 | - | - | - | - |
| | Témoin | 8,1 | - | 6,3 | 6,4 | - | - | 6,4 | - | - | 6,4 | - | - | - | - |
| 180°C | Introduction DBTL à 6 min | 6,9 | - | 5,4 | 5,7 | - | - | 6,6 | - | - | 7,8 | 9 | - | - | - |
| | Témoin | 6,9 | - | 5,4 | 5,5 | - | - | 5,5 | - | - | 5,5 | - | - | - | - |
| 200°C | Introduction DBTL à 20 min | 6 | 4,5 | - | 4,5 | - | - | 5,4 | - | - | 6,6 | 9 | 10,5 | 12 | 13 |
| | Témoin | 6 | 4,5 | - | 4,5 | - | - | 5,4 | - | - | 6,6 | 6,8 | 7,0 | 7,2 | 7,4 |
| 240°C | Introduction DBTL à 10 min | 3,3 | - | - | 4,5 | 12 | 17,4 | - | 4 | 1,5 (poudrage complet) | | | | | |
| | Témoin | 3,3 | - | - | 4,5 | 5,1 | 5,4 | - | 6,1 | 6,8 | | | | | 9,4 |

EXEMPLE 4

Dans un malaxeur BRABENDER identique à celui de l'exemple 2 on mélange pendant 10 min à 50 t/min et à 130°C :

| | Parties poids Essai A | Parties poids Essai B |
|---|---|---|
| Copolymère éthylène-acrylate d'hydroxyéthyle à 7 % en poids | 99,3 | 98,8 |
| Dibutyldilaurate d'étain (DBTL) | 0,5 | 1,0 |
| Antioxydant (Irganox 1010) | 0,2 | 0,2 |

A partir de ces mélanges, ainsi que d'un mélange ne contenant pas de DBTL on prépare des plaques de 1 mm d'épaisseur à 160°C sous pression de 250 bars. Ces plaques maintenues entre des contreplaques sont portées à 200°C pendant une heure afin d'effectuer thermiquement la réticulation. La plaque témoin ne présente aucune tenue mécanique.

Dans les plaques refroidies obtenues à partir des essais A et B on découpe des éprouvettes de type haltère, auxquelles sont suspendus des poids donnant une charge de 2 kg/cm$^2$. Elles sont placées dans une étuve ventilée à 150°C pendant 75 min.

L'allongement mesuré en fonction du temps est donné dans le tableau suivant :

| Temps min. | Essai A | Essai B |
|---|---|---|
| 5 | 127 % | 64 % |
| 10 | 133 % | 67 % |
| 15 | 134 % | 67 % |
| 75 | 145 % | 67 % |

EXEMPLE 5

On malaxe sous azote dans le BRABENDER de l'exemple 2 à 50 t/min 99 % en poids de copolymère éthylène-acrylate d'hydroxyéthyle à 2,5 % en poids et 1 % de DBTL introduit au temps t−0 du malaxage. Dans les mêmes conditions on malaxe le copolymère sans DBTL.

Les variations de couple Nxm de malaxage à différentes températures sont données dans le tableau suivant :

| Variation de couple de malaxage (Nxm) à t°C ↓ | Temps min de malaxage → | 0 | 6 | 10 | 20 | 30 | 40 | 50 | 60 |
|---|---|---|---|---|---|---|---|---|---|
| 200°C | Essai | 5,07 | 7,25 | 7,70 | 7,80 | 10,35 | 12,25 | 13,70 | 15,35 |
| | Témoin | 5,07 | - | - | - | - | - | - | 5,20 |
| 220°C | Essai | 4,40 | 8,20 | 8,65 | 10,85 | 13,70 | 16,15 | 17,80 | 18,40 |
| | Témoin | 4,40 | - | - | - | - | - | - | 4,50 |
| 240°C | Essai | 3,65 | 10,45 | 11,95 | 16,75 | 15,00 | Poudrage | | |
| | Témoin | 3,65 | - | - | - | 3,70 | | | |

EXEMPLE 6

On reprend l'exemple 5 en remplaçant le DBTL par le diacétate de dibutylétain (DBTDA) Les résultats obtenus sont les suivants :

| Variation de couple de malaxage (Nxm) à t°C | Temps min de malaxage | 0 | 6 | 10 | 20 | 30 | 40 | 50 | 60 |
|---|---|---|---|---|---|---|---|---|---|
| 200°C | Essai | 4,55 | 9,45 | 9,40 | 11,80 | 14,15 | 15,55 | 15,70 | 15,60(le produit sort de la cuve) |
| | Témoin | 4,55 | - | - | - | - | - | - | 4,60 |
| 220°C | Essai | 3,25 | 10,40 | 11,40 | 15,00 | 16,05 | - | - | - |
| | Témoin | 3,25 | - | - | - | 4,25 | - | - | - |
| 240°C | Essai | 3,25 | 12,80 | Poudrage | | | | | |
| | Témoin | 3,25 | - | - | 3,25 | | | | |

EXEMPLE 7

On reprend l'exemple 5 en remplaçant le DBTL par 1 % d'octoate stanneux et on ajoute 0,2 % d'antioxydant (Santonox R).

Les résultats obtenus sont les suivants :

| Variation de couple de malaxage ↓ (Nxm) à t°C | Temps min de malaxage → | 0 | 6 | 10 | 20 | 30 | 40 | 50 | 60 |
|---|---|---|---|---|---|---|---|---|---|
| 200°C | Essai | 4,25 | 5,45 | 6,10 | 6,45 | 7,80 | 8,65 | 9,70 | 10,45 |
| | Témoin | 4,2 | - | - | - | - | - | - | 4,3 |

EXEMPLE 8

On malaxe sous azote dans le BRABENDER de l'exemple 2 à 50 t/min 98,8 % en poids de copolymère éthylène-acrylate d'hydroxyéthyle à 15 % en poids, 1 % de DBTL et 0,2 % d'antioxydant (Santonox R). On prépare dans les mêmes conditions un témoin sans DBTL.

Les résultats obtenus sont les suivants :

| Variation de couple de malaxage ↓ (Nxm) à t°C | Temps min de malaxage → | 0 | 6 | 10 | 14 | 20 | 30 | 40 | 50 | 60 |
|---|---|---|---|---|---|---|---|---|---|---|
| 130°C | Essai | 4,80 | 4,60 | 4,60 | 4,75 | 5,10 | 7,65 | 8,35 | 8,60 | 9,35 |
| | Témoin | 4,80 | - | - | - | - | - | - | - | 4,80 |
| 200°C | Essai | 4,05 | 10,55 | Poudrage | | | | | | |
| | Témoin | 4,05 | 4,15 | | | | | | | |

EXEMPLE 9

On malaxe sous azote dans le BRABENDER de l'exemple 2 à 50 t/min et à 200°C un copolymère éthylène-acrylate d'hydroxyéthyle à 5,5 % en poids avec, par rapport au poids de chacun des mélanges, 2 % de stéarate dibasique de plomb (essai 1), 0,5 % de maléate d'étain (essai 2), 1 % de maléate d'étain (essai 3).

Les résultats obtenus sont les suivants :

| Variation de couple de malaxage (Nxm) à 200°C | Temps en min de malaxage | | | | | | |
|---|---|---|---|---|---|---|---|
| | 0 | 0,5 | 1 | 2 | 3 | 4 | 7 |
| Essai 1 | 6,2 | 7,6 | 11,4 | 12,5 | 12,8 | 12,9 | Poudrage |
| Essai 2 | 6,0 | 9,0 | 10,5 | 12,0 | 12,7 | 12,8 | Poudrage |
| Essai 3 | 6,1 | 11,0 | 13,4 | Poudrage | | | |
| Témoin | 6,1 | - | - | - | 6,1 | | |

EXEMPLE 10

Dans le BRABENDER de l'exemple 2 on mélange en 15 minutes à 130° C avec une vitesse de 50 t/min :

| | Parties en poids | |
|---|---|---|
| | Essai 1 | Essai 2 |
| Copolymère éthylène-acrylate d'hydroxy-éthyle à 10 % en poids | 98,8 | - |
| Copolymère éthylène-acrylate d'hydroxy-éthyle à 15 % en poids | - | 98,8 |
| DBTL | 1,0 | 1,0 |
| Antioxydant (Santonox R) | 0,2 | 0,2 |

A partir de chacun de ces deux mélanges, ainsi que des mélanges témoins ne contenant pas de DBTL on prépare des plaques de 1mm d'épaisseur à 130° C pendant 5 minutes sous 15 tonnes. Ces plaques maintenues entre des contreplaques sont portées à 200° C pendant 30 minutes afin d'achever thermiquement la réticulation.

Les taux de gel sont ensuite mesurés sur chaque échantillon.

| | Taux de gel | |
|---|---|---|
| | Fusion à 130°C | Fusion à 200°C |
| Témoins | 0 | 0 |
| Essai 1 | 0 | 70 |
| Essai 2 | 0 | 87 |

EXEMPLE 11

On malaxe dans les conditions de l'exemple 10 les mélanges suivants :

| | Essai 1 | Essai 2 | Essai 3 | Témoins 1 | Témoins 2 |
|---|---|---|---|---|---|
| Copolymère éthylène-acrylate d'hydroxyéthyle à 10% en poids | 98,8 | 98,8 | - | 99,8 | - |
| Terpolymère éthylène-acrylate d'hydroxyéthyle à 5% - acrylate d'éthyle à 10% en poids | - | - | 98,8 | - | 99,8 |
| DBTL | 1,0 | - | - | - | - |
| Diacétate de dibutylétain | - | 1,0 | 1,0 | - | - |
| Antioxydant (Santonox R) | 0,2 | 0,2 | 0,2 | 0,2 | 0,2 |

Dans les conditions de l'exemple 10 on prépare des plaques qui sont maintenues en étuve à 100°C pendant 8 heures afin d'effectuer thermiquement la réticulation.

Les taux de gel finalement mesurés sont donnés ci-dessous.

| | Taux de gel | |
|---|---|---|
| | 5 min. à 130°C | 8 h à 100°C |
| Témoins 1 et 2 | 0 | 0 |
| Essai 1 | 0 | 37 |
| Essai 2 | 0 | 71 |
| Essai 3 | 26 | 71 |

EXEMPLE 12

On malaxe sous azote dans un BRABENDER type W50 EC à 50 t/min et à 200° les mélanges suivants :

| | PARTIES POIDS | |
|---|---|---|
| | ESSAI 1 | ESSAI 2 |
| Copolymère éthylène-acrylate d'hydroxypropyle à 5 % en poids (MI = 24) | 99,2 | - |
| Copolymère éthylène-méthacrylate d'hydroxyéthyle à 5 % en poids (MI=10) | - | 99,2 |
| Maléate de dibutylétain (DBTM) | 0,5 | 0,5 |
| Antioxydant (Irganox 1010) | 0,3 | 0,3 |

Les variations de couple Nxm de malaxage à cette température sont données dans le tableau suivant :

| Temps de malaxage (min) / Essais | 0 | 1 | 2 | 5 | 8 | 10 | 12 | 14 | 16 | 18 | 20 | 22 | 26 |
|---|---|---|---|---|---|---|---|---|---|---|---|---|---|
| 1 | 1,4 | 2,5 | 3,8 | 8 | 10,4 | 11,2 | 11,7 | 12,2 | 12,6 | 12,7 | 13,0 | 13,0 | 13,0 |
| 2 | 1,5 | 3,7 | 4,3 | 8,7 | 10,8 | 11,5 | 12,0 | 12,3 | 12,5 | 12,7 | 13,3 | 13,7 | 15,0 |

EXEMPLE 13

On reprend les compositions des Essais 1 et 2 de l'exemple 12 que l'on malaxe sous azote dans le BRABENDER à 130 °C et à 50 t/min pendant 10 min. Par compression sous 250 bars à 130 °C, on prépare des plaques de 1 mm d'épaisseur que l'on conserve en étuve à 100 °c pendant 8 heures. A titre comparatif, on effectue le même essai avec un copolymère exempt de DBTM. La mesure du taux de gel ainsi que les propriétés mécaniques sont indiquées dans le tableau suivant :

| | TRACTION | | | |
|---|---|---|---|---|
| ESSAIS | Résistance au seuil d'écoulement (MPa) | Résistance à la rupture (MPa) | Allongement à la rupture % | Taux de gel % |
| Comparatif | * n.d | n.d | n.d | 0 |
| 1 | 12 | 10 | 80 | 31 |
| 2 | 12 | 10 | 80 | 15 |

* n.d : non déterminé

EXEMPLE 14

Dans les conditions de l'exemple 12 on malaxe à 50 t/min, sous azote, à 200 °C les formulations suivantes :

| | PARTIES EN POIDS | | |
|---|---|---|---|
| | Essai 1 | Essai 2 | Essai 3 |
| Copolymère éthylène acétate de vinyle à 18 % en poids (MI = 140) | 100 | - | - |
| Copolymère éthylène-acétate de vinyle à 18 % en poids - acrylate d'hydroxyéthyle à 5 % en poids | - | 100 | - |
| Copolymère éthylène-acrylate d'hydroxyéthyle à 5 % | - | - | 100 |
| DBTM | 0,5 | 0,5 | 0,5 |
| Antioxydant (Santonox R) | 0,2 | 0,2 | 0,2 |

Les variations du couple N x m de malaxage à 200°C sont indiquées dans le tableau suivant :

| Temps de malaxage (min) / Essais | 0 | 1 | 2 | 4 | 8 | 10 | 20 | 26 | 32 | 38 | |
|---|---|---|---|---|---|---|---|---|---|---|---|
| 1 | 0,30 | 0,35 | - | - | - | - | - | - | - | 0,35 | |
| 2 | 2,40 | 3,15 | 4,30 | 5,60 | 5,90 | poudrage | | | | | |
| 3 | 2,40 | 3,20 | 4,75 | 5,40 | 6,45 | 7,35 | 10,70 | 12,05 | 12,05 | 12,25 | poudrage |

La présence d'acétate de vinyle accélère la cinétique de réticulation.

EXEMPLE 15

Dans le malaxeur de l'exemple 12 on malaxe à 50 t/min, sous azote, à 200°C les formulations suivantes :

| | PARTIES EN POIDS | | | |
|---|---|---|---|---|
| | Essai 1 | Essai 2 | Essai 3 | Essai 4 |
| Copolymère éthylène-acétate de vinyle à 18 % en poids (MI = 2) | 100 | - | - | - |
| Copolymère éthylène-acétate de vinyle à 15,7 % en poids-acrylate d'hydroxyéthyle à 5 % en poids (MI = 2,9) | - | 100 | - | - |
| Copolymère éthylène-acétate de vinyle à 21 % en poids - acrylate d'hydroxyéthyle à 5 % en poids (MI = 13,2) | - | - | 100 | - |
| Copolymère éthylène-acrylate d'hydroxyéthyle à 4,5 % en poids (MI = 5,8) | - | - | - | 100 |
| DBTM | 1 | 1 | 1 | 1 |
| Antioxydant (Santonox R) | 0,2 | 0,2 | 0,2 | 0,2 |

Les variations du couple N x m de malaxage à 200 °C sont indiquées dans le tableau suivant :

| Temps de malaxage (min) / Essais | 0 | 1 | 2 | 3 | 8 | 10 | 16 | 20 | 26 | 32 | 38 | 40 |
|---|---|---|---|---|---|---|---|---|---|---|---|---|
| 1 | 3,25 | 0,80 | 3,15 | 3,60 | 3,60 | 3,70 | 3,80 | 3,85 | 3,90 | 4,00 | 4,15 | 4,15 |
| 2 | 3,25 | 4,25 | 8,85 | 11,75 | (poudrage) | | | | | | | |
| 3 | 1,50 | 2,30 | 6,40 | 12,30 | (poudrage) | | | | | | | |
| 4 | 2,30 | 3,00 | 5,00 | 6,70 | 9,90 | 10,50 | (poudrage à 11 min) | | | | | |

**Revendications**

1. Procédé de réticulation de copolymère d'éthylène et d'ester d'hydroxyalkyle caractérisé en ce qu'on le fait réagir avec un composé organométallique de plomb ou d'étain.

2. Procédé selon la revendication 1 caractérisé en ce que le composé organométallique est choisi parmi les sels d'acides organiques.

3. Procédé selon l'une des revendications 1 à 2 caractérisé en ce que le sel d'acide est choisi parmi les sels des acides organiques contenant jusqu'à 25 atomes de carbone.

4. Procédé selon l'une des revendications 1 à 3 caractérisé en ce que le composé organométallique est choisi parmi les produits de bas poids moléculaire.

5. Procédé selon l'une des revendications 1 à 4 caractérisé en ce que le composé organométallique est choisi parmi le diacétate de dibutylétain, le dilaurate de dibutylétain, l'octoate de plomb, le stéarate de plomb, le stéarate d'étain.

6. Procédé selon l'une des revendications 1 à 5 caractérisé en ce qu'on fait réagir le copolymère avec 0,05 à 5 pour cent en poids du composé organométallique.

7. Procédé de réticulation de copolymère d'éthylène et d'ester d'hydroxyalkyle selon l'une des revendications 1 à 6 caractérisé en ce qu'on fait réagir un copolymère d'éthylène et d'acrylate ou méthacrylate d'hydroxyalkyle avec le composé organométallique.

8. Procédé selon la revendication 7 caractérisé en ce que le copolymère est à base également d'un tiers monomère polymérisable éthyléniquement insaturé.

9. Procédé selon la revendication 8 caractérisé en ce que le tiers monomère est l'acétate de vinyle ou l'acrylate d'éthyle.

10. Procédé selon l'une des revendications 7 à 9 caractérisé en ce que le copolymère contient de 0,5 à 40 pour cent en poids de produit de polymérisation de l'acrylate ou du méthacrylate d'hydroxyalkyle.

11. Procédé selon l'une des revendications 1 à 10 caractérisé en ce qu'on mélange le copolymère et le composé organométallique à une température comprise entre la température ambiante et 300 °C.

12. Procédé selon l'une des revendications 1 à 10 caractérisé en ce que, après transformation du copolymère, le matériau obtenu est mis en contact superficiellement avec le composé organométallique.

## Claims

1. Process for crosslinking a copolymer of ethylene and a hydroxyalkyl ester, characterised in that it is reacted with an organometallic compound of lead or of tin.

2. Process according to Claim 1, characterised in that the organometallic compound is chosen from among the salts of organic acids.

3. Process according to one of Claims 1 to 2, characterised in that the acid salt is chosen from among the salts of organic acids containing up to 25 carbon atoms.

4. Process according to any of Claims 1 to 3, characterised in that the organometallic compound is chosen from among the products of low molecular weight.

5. Process according to any of Claims 1 to 4, characterised in that the organometallic compound is chosen from among dibutyl-tin diacetate, dibutyl-tin dilaurate, lead octoate, lead stearate and tin stearate.

6. Process according to any of Claims 1 to 5, characterised in that the copolymer is reacted with 0.05 to 5 per cent by weight of the organometallic compound.

7. Process for crosslinking a copolymer of ethylene and a hydroxyalkyl ester, according to any of Claims 1 to 6, characterised in that a copolymer of ethylene and a hydroxyalkyl acrylate or methacrylate is reacted with the organometallic compound.

8. Process according to Claim 7, characterised in that the copolymer is furthermore based on a third ethylenically unsaturated polymerisable monomer.

9. Process according to Claim 8, characterised in that the third monomer is vinyl acetate or ethyl acrylate.

10. Process according to any of Claims 7 to 9, characterised in that the copolymer contains from 0.5 to 40 per cent, by weight of the polymerisation product, of the hydroxyalkyl acrylate or methacrylate.

11. Process according to any of Claims 1 to 10, characterised in that the copolymer and the organometallic compound are mixed at a temperature of between ambient temperature and 300 °C.

12. Process according to any of Claims 1 to 10, characterised in that after conversion of the copolymer, the material obtained is brought into surface contact with the organometallic compound.

## Ansprüche

1. Verfahren zur Vernetzung eines Ethylen-Hydroxyalkylester-Copolymeren, dadurch gekennzeichnet, daß man dieses mit einer metallorganischen Blei- oder Zinnverbindung umsetzt.

2. Verfahren nach Anspruch 1, dadurch gekennzeichnet, daß die metallorganische Verbindung aus den Salzen organischer Säuren ausgewählt ist.

3. Verfahren nach Anspruch 1 oder 2, dadurch gekennzeichnet, daß dieses Salz aus den Salzen der bis zu 25 Kohlenstoffatome enthaltenden organischen Säuren ausgewählt ist.

4. Verfahren nach einem der Ansprüche 1 bis 3, dadurch gekennzeichnet, daß die metallorganische Verbindung aus den Substanzen mit niederem Molekulargewicht ausgewählt ist.

5. Verfahren nach einem der Ansprüche 1 bis 4, dadurch gekennzeichnet, daß die metallorganische Verbindung aus Dibutylzinndiacetat, Dibutylzinndilaurat, Bleioctoat, Bleistearat und Zinnstearat ausgewählt ist.

6. Verfahren nach einem der Ansprüche 1 bis 5, dadurch gekennzeichnet, daß man das Copolymere mit 0,05 bis 5 Gew.% metallorganischer Verbindung umsetzt.

7. Verfahren zur Vernetzung eines Ethylen-Hydroxyalkylester-Copolymeren nach einem der Ansprüche 1 bis 6, dadurch gekennzeichnet, daß man ein Ethylen-Hydroxyalkylacrylat-oder Hydroxyalkylmethacrylat-Copolymeres mit der metallorganischen Verbindung umsetzt.

8. Verfahren nach Anspruch 7, dadurch gekennzeichnet, daß das Copolymere noch auf einem dritten, ethylenisch ungesättigten polymerisierbaren Monomeren basiert.

9. Verfahren nach Anspruch 8, dadurch gekennzeichnet, daß das dritte Monomere Vinylacetat oder Ethylacrylat ist.

10. Verfahren nach einem der Ansprüche 7 bis 9, dadurch gekennzeichnet, daß das Copolymere 0,5 bis 40 Gew.% Polymerisationsprodukt des Hydroxyalkylacrylats oder -methacrylats enthält.

11. Verfahren nach einem der Ansprüche 1 bis 10, dadurch gekennzeichnet, daß man das Copolymere und die metallorganische Verbindung bei einer Temperatur zwischen Umgebungstemperatur und 300 °C mischt.

12. Verfahren nach einem der Ansprüche 1 bis 10, dadurch gekennzeichnet, daß die Oberfläche des nach Umwandlung des Copolymeren erhaltenen Materials mit der metallorganischen Verbindung in Berührung gebracht wird.